# EUROPÄISCHE PATENTANMELDUNG

(11) **EP 1 958 805 A1**
(43) Veröffentlichungstag der Anmeldung: **20.08.2008**
(21) Anmeldenummer: 07033594.8
(22) Anmeldetag: 27.12.2007
(51) Int. Cl.: B60H 1/00

(54) **Kraftfahrzeug mit einer Klimaanlage zur Standklimatisierung**

(30) Priorität: 19.02.2007 DE 102007008112
(71) Anmelder: Enerday GmbH, 82131 Stockdorf (DE)
(72) Erfinder: Pfalzgraf, Manfred, 82211 Herrsching am Ammersee (DE); Bedenbecker, Markus, 82131 Gauting (DE); Boltze, Matthias, 17039 Wulkenzin (OT Neuendorf) (DE); Engl, Andreas, 80689 München (DE)
(74) Vertreter: Schumacher & Willsau

(57) **Zusammenfassung**

Die Erfindung betrifft eine Klimaanlage (12) für ein Kraftfahrzeug (10), mit einem Brennstoffzellensystem (14) zum Betreiben eines Kältekreises (16).

Vorteilhafterweise ist dabei vorgesehen, dass die Klimaanlage (12) dazu angepasst ist, die Abwärme zumindest einer ihrer Komponenten (18, 26, 42, 58) in einen Kühlkreislauf (98) für ein Antriebsaggregat (94) des Kraftfahrzeugs (10) einzuspeisen, um die Abwärme über den Kühlkreislauf (98) abzutransportieren.

Darüber hinaus betrifft die Erfindung ein Kraftfahrzeug mit solch einer Klimaanlage und ein Verfahren zum Steuern solch einer Klimaanlage.

## Beschreibung

Die Erfindung betrifft ein Kraftfahrzeug mit: einem Antriebsaggregat zum Antrieb des Kraftfahrzeugs; einem Kühlkreislauf, in dem Flüssigkeit zur Kühlung des Antriebsaggregats zirkuliert werden kann; einer Klimaanlage zur Standklimatisierung des Kraftfahrzeugs, welche ein Brennstoffzellensystem zum Betreiben eines Kältekreises aufweist.

Darüber hinaus betrifft die Erfindung eine Klimaanlage für ein Kraftfahrzeug, mit einem Brennstoffzellensystem zum Betreiben eines Kältekreises.

Ferner betrifft die Erfindung ein Verfahren zum Steuern einer Klimaanlage zur Standklimatisierung eines Kraftfahrzeugs, welche ein Brennstoffzellensystem zum Betreiben eines Kältekreises aufweist.

Aus der WO 03/093737 A1 ist ein Fahrzeug mit einer Standklimaanlage bekannt, welche ein Brennstoffzellensystem zur Klimatisierung des Fahrzeugs aufweist. Insbesondere bei einer Nachrüstung im Kofferraum oder in einem anderen geschlossenen Bauraum kann jedoch die im Betrieb der Klimaanlage, insbesondere im Betrieb des Brennstoffzellensystems, entstehende Abwärme zu einer beträchtlichen Aufheizung des geschlossenen Bauraumes führen.

Es ist daher die Aufgabe der vorliegenden Erfindung die gattungsgemäße Klimaanlage derart weiterzubilden, dass eine gute Abführung der Abwärme der Klimaanlage gewährleistet werden kann.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Das erfindungsgemäße Kraftfahrzeug baut auf dem gattungsgemäßen Stand der Technik dadurch auf, dass die Abwärme zumindest einer Komponente der Klimaanlage in den Kühlkreislauf einspeisbar ist, um die Abwärme über den Kühlkreislauf abzutransportieren. Die Abwärme erzeugenden Komponenten sind dabei vor allem ein Reformer, ein Brennstoffzellenstapel und ein Nachbrenner des Brennstoffzellensystems sowie ein Kondensator des Kältekreises. Durch die Einspeisung der Abwärme dieser Komponenten in den fahrzeugeigenen Kühlkreislauf ergeben sich verschiedene Vorteile. Zum einen kann dadurch eine Aufheizung des geschlossenen Bauraumes, in dem die Klimaanlage montiert ist, verhindert werden. Dies ist vor allem dann von entscheidender Bedeutung, wenn die Klimaanlage im Kofferraum oder im Fahrzeuginnenraum in Form eines Kühlturmes installiert ist. Zum anderen hat dies den Nebeneffekt, dass während des Betriebs der Klimaanlage der während dieses Betrieb in der Regel stillstehende Verbrennungsmotor des Kraftfahrzeugs vorgewärmt wird, so dass dieser ein verbessertes Kaltstartverhalten bieten.

Darüber hinaus ist vorteilhafterweise vorgesehen, dass die Abwärme über den Kühlkreislauf abtransportierbar ist und an anderer Stelle einem Fahrzeuginnenraum für Heizzwecke zuführbar ist. Dadurch wird die Abwärme während eines Heizbetriebs der Klimaanlage nicht verschwendet, sondern zum effizienteren Heizen des Fahrzeuginnenraumes eingesetzt, so dass die Heizleistung der Klimaanlage verbessert wird.

Gemäß einer vorteilhaften Ausführungsform ist vorgesehen, dass in den Kühlkreislauf ein Wärmetauscher eingebunden ist, wobei die Abwärme über den Kühlkreislauf abtransportierbar ist und über den Wärmetauscher an die Umgebungsluft abgegeben werden kann. Dadurch kann eine verbesserte Kühlung der Klimaanlage realisiert und somit ein Aufheizen des Bauraumes verhindert werden.

Ferner ist vorteilhafterweise vorgesehen, dass des Weiteren in den Kühlkreislauf eine Pumpe eingebunden ist, deren Betrieb abhängig vom Betrieb der Klimaanlage steuerbar ist.

Befindet sich die Klimaanlage im Kühlbetrieb, dann wird die Pumpe eingeschaltet, um die Abwärme einer oder mehrerer heißer Komponenten der Klimaanlage abzutransportieren und an die Umgebungsluft abzugeben. Im Heizbetrieb kann die Pumpe wahlweise eingeschaltet werden, um die Abwärme abzutransportieren, um sie an anderer Stelle für Heizzwecke einem Fahrzeuginnenraum zuzuführen.

Diese Ausführung kann dadurch weitergebildet sein, dass dem Wärmetauscher des Weiteren ein Gebläse zugeordnet ist, dessen Betrieb abhängig vom Betrieb der Klimaanlage steuerbar ist. Dadurch kann bei Betrieb der Klimaanlage die Abgabe der Abwärme vom Wärmetauscher an die Umgebungsluft unterstützt werden.

Mit der erfindungsgemäßen Klimaanlage und dem erfindungsgemäßen Verfahren zum Steuern solch einer Klimaanlage können die vorstehend genannten Vorteile in übertragener Weise erreicht werden.

Eine bevorzugte Ausführungsform der Erfindung wird nachfolgend mit Bezug auf die begleitenden Zeichnungen beispielhaft erläutert.

Es zeigen:
- Figur 1: eine schematische Darstellung einer Klimaanlage;
- Figur 2: eine schematische Darstellung des Kraftfahrzeugs mit der Klimaanlage; und
- Figur 3: ein Flussdiagramm eines Klimatisierungsbetriebs.

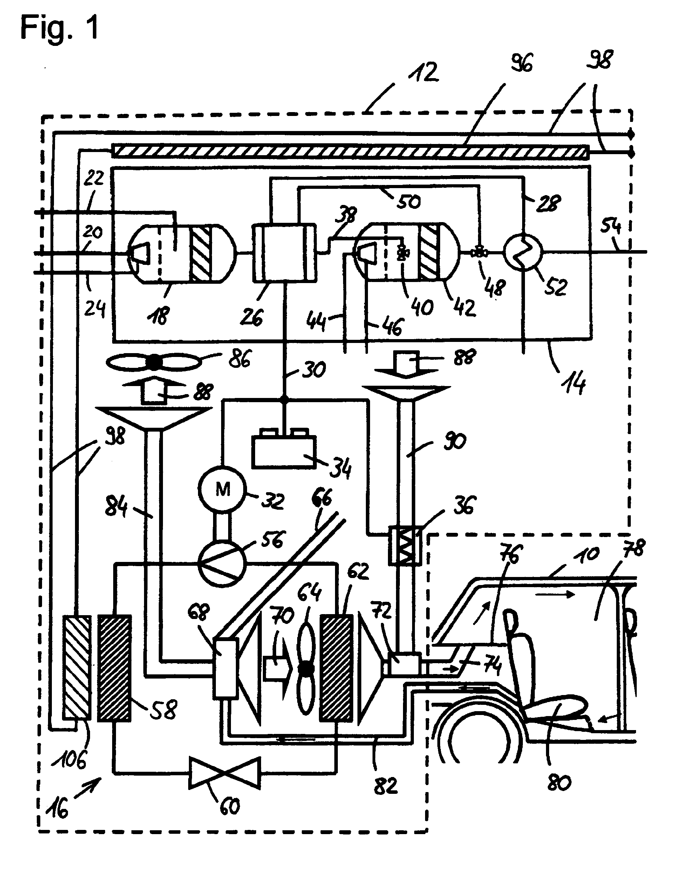

Figur 1 zeigt eine schematische Darstellung einer Klimaanlage. Die in einem Kraftfahrzeug 10 installierte Klimaanlage 12, die mit einer gestrichelten Linie umrissen ist, umfasst als Hauptelemente ein Brennstoffzellensystem 14 und einen Kältekreis 16.

Das Brennstoffzellensystem 14 umfasst einen Reformer 18, dem über einen Brennstoffstrang 20 aus einem nicht dargestellten Brennstofftank Brennstoff zuführbar ist. Ferner ist dem Reformer 18 an einer zweiten Brennstoffzuführstufe mittels eines Brennstoffstrangs 22 ebenfalls aus dem Brennstofftank Brennstoff zuführbar. Als Brennstoffsorten kommen Diesel, Benzin, Erdgas und weitere aus dem Stand der Technik bekannte Brennstoffsorten in Frage. Weiterhin ist dem Reformer 18 über einen Oxidationsmittelstrang 24 Oxidationsmittel, d.h. insbesondere Luft, zuführbar. Das von dem Reformer 18 erzeugte Reformat ist einem Brennstoffzellenstapel 26 zuführbar. Alternativ kann anstatt des Brennstoffzellenstapels 26 auch nur eine Brennstoffzelle vorgesehen sein. Bei dem Reformat handelt es sich um ein wasserstoffhaltiges Gas, das in dem Brennstoffzellenstapel 26 mit Hilfe von über einen Kathodenzuluftstrang 28 geförderter Kathodenzuluft unter Erzeugung von elektrischer Energie und Wärme umgesetzt wird. Die erzeugte elektrische Energie ist über eine elektrische Leitung 30 einem Elektromotor 32, einer Batterie 34 und einer elektrischen Heizeinrichtung 36 der Klimaanlage 12 zuführbar. Im dargestellten Fall ist das Anodenabgas über einen Anodenabgasstrang 38 einer Mischeinheit 40 eines Nachbrenners 42 zuführbar. Ferner ist dem Nachbrenner 42 über einen Brennstoffstrang 44 Brennstoff aus dem Brennstofftank und über einen Oxidationsmittelstrang 46 Oxidationsmittel zuführbar. In den Brennstoffsträngen 20, 22 und 44 sind geeignete, nicht dargestellte Fördereinrichtungen, wie beispielsweise Pumpen, angeordnet. Ebenso sind in den Oxidationsmittelsträngen 24 und 46 entsprechende, nicht dargestellte Fördereinrichtungen, in diesem Fall vorzugsweise Gebläse, angeordnet. Diese Fördereinrichtungen können direkt vom Brennstoffzellenstapel 26 oder von der Batterie 34 mit Strom versorgt werden. In dem Nachbrenner 42 erfolgt eine Umsetzung des abgereicherten Anodenabgases mit dem geförderten Brennstoff und Oxidationsmittel zu einem Verbrennungsabgas, welches in einer Mischeinheit 48 mit Kathodenabluft vermischt wird, die über einen Kathodenabluftstrang 50 von dem Brennstoffzellenstapel 26 zu der Mischeinheit 48 gefördert wird. Das Verbrennungsabgas, welches nahezu keine Schadstoffe enthält, durchströmt einen Wärmetauscher 52 zum Vorwärmen der Kathodenzuluft und verlässt schließlich das Brennstoffzellensystem 14 über einen Abgasauslass 54. Die Abwärme eines oder mehrerer heißer Teile des Brennstoffzellensystems 14 kann durch einen Wärmetauscher 96 an einen später genauer erläuterten Kühlkreislauf 98 abgegeben und somit abtransportiert werden. Die heißen Teile des Brennstoffzellensystems 14 umfassen zumindest eine Komponente aus der Gruppe bestehend aus: Reformer 18, Brennstoffzellenstapel 26 und Nachbrenner 42. Dabei kann wie in Figur 1 gezeigt, ein Wärmetauscher 96 vorgesehen sein oder es können mehrere, den jeweiligen heißen Teilen des Brennstoffzellensystems 14 zugeordnete Wärmetauscher vorgesehen sein.

In dem Kältekreis 16 sind ein Kompressor 56, ein Kondensator 58, ein Expansionsorgan 60 und ein Verdampfer 62 angeordnet. Dem Kondensator 58 ist ferner ein Wärmetauscher 106 zugeordnet, über den Abwärme des Kondensators 58 im Betrieb des Kältekreises 16 dem Kühlkreislauf 98 zugeführt werden kann. Der Kompressor 56 ist von dem Elektromotor 32 antreibbar, welcher wiederum vorzugsweise durch den Brennstoffstoffzellenstapel 26 des Brennstoffzellensystems 14 mit Energie versorgt wird, aber kurzzeitig auch von der Batterie 34 mit Energie versorgt werden kann. Dem Verdampfer 62 ist ein Gebläse 64 zugeordnet. Über eine Außenluftleitung 66 kann von Außen Umgebungsluft angesaugt werden. Der Begriff "von Außen", wie er im Zusammenhang mit dieser Erfindung verwendet wird, bedeutet dabei von außerhalb des Innenraumes 78, bezeichnet somit die das Kraftfahrzeug 10 umgebende Luft. Die Außenluftleitung 66 führt zu einer Stelleinrichtung 68, welche die Außenluft dem Gebläse 64 zuführen kann. Die von der Stelleinrichtung 68 zum Gebläse 64 geleitete Luft strömt als Luftstrom 70 an dem Verdampfer 62 vorüber. Auf diese Weise kann dem Luftstrom 70 durch den Verdampfer 62 Wärmeenergie entzogen werden. Der gekühlte Luftstrom kann dann über eine Stelleinrichtung 72, eine Luftführung 74 und eine Hutablage 76 einem Fahrzeuginnenraum 78 zugeführt werden. Die Stelleinrichtung 72 kann beispielsweise durch ein Elektromagnetventil oder durch Rückschlagventile, welche jeweils nur eine Strömung von den beiden Zuleitungen hin zur Luftführung 74 zulassen, realisiert werden. Die gekühlte Luft strömt durch den Fahrzeuginnenraum 78 und verlässt diesen unterhalb einer Sitzbank 80, vorzugsweise der hinteren Sitzbank. Anschließend strömt die Luft über eine Luftführung 82 zurück zu der Stelleinrichtung 68, wo sie ganz oder teilweise nach Außen abgeführt wird oder zurück zum Gebläse 64 geleitet wird. Für die Führung der Luft nach Außen ist eine entsprechende Leitung vorgesehen, die aus Gründen der Übersichtlichkeit nicht dargestellt ist. Über die Schaltung der Stelleinrichtung 68 lässt sich somit wahlweise ein Frischluft- oder ein Umluftkonzept realisieren, bei dem Luft von Außen über die Außenluftleitung 66 angesaugt wird oder die Luft aus der Luftführung 82 rezirkuliert wird. Auch Mischformen dieser Betriebsarten sind möglich. Ferner kann mittels der Stelleinrichtung 68, die über die Außenluftleitung 66 eingeleitete Luft einer Luftführung 84 und über diese einem Gebläse 86 zugeführt werden. In diesem Falle strömt diese Luft als Luftstrom 88 an heißen Teilen des Brennstoffzellensystems 14 direkt vorüber. Die heißen Teile des Brennstoffzellensystems 14 sind vorzugsweise der Reformer 18, der Brennstoffzellenstapel 26 und der Nachbrenner 42. Auf diese Weise kann durch die Abwärme der heißen Teile des Brennstoffzellensystems 14 dem Luftstrom 88 Wärmeenergie zugeführt werden. Der erwärmte Luftstrom 88 führt über eine Luftführung 90 zu der elektrischen Heizeinrichtung 36, die direkt von einer vom Brennstoffzellenstapel 26 erzeugten oder von der Batterie 34 gespeicherten Energie versorgt wird. Somit kann in einem Heizbetrieb die ohnehin schon vorgewärmte Luft in der Luftführung 90 weiter erwärmt werden und über die Stelleinrichtung 72 und die Luftführung 74 dem Innenraum 78 zugeführt werden. Nach dem Durchströmen des Innenraums 78 führt der Luftstrom über die Luftführung 82 zur Stelleinrichtung 68, wo er entweder nach Außen abgeführt wird oder zurück zum Gebläse 86 geleitet wird. Auch hierbei lässt sich über die Schaltung der Stelleinrichtung 68 somit wahlweise in einem solchen Heizbetrieb ein Umluftkonzept realisieren, bei dem Luft von Außen über die Außenluftleitung 66 angesaugt wird oder die Luft aus der Luftführung 82 rezirkuliert wird.

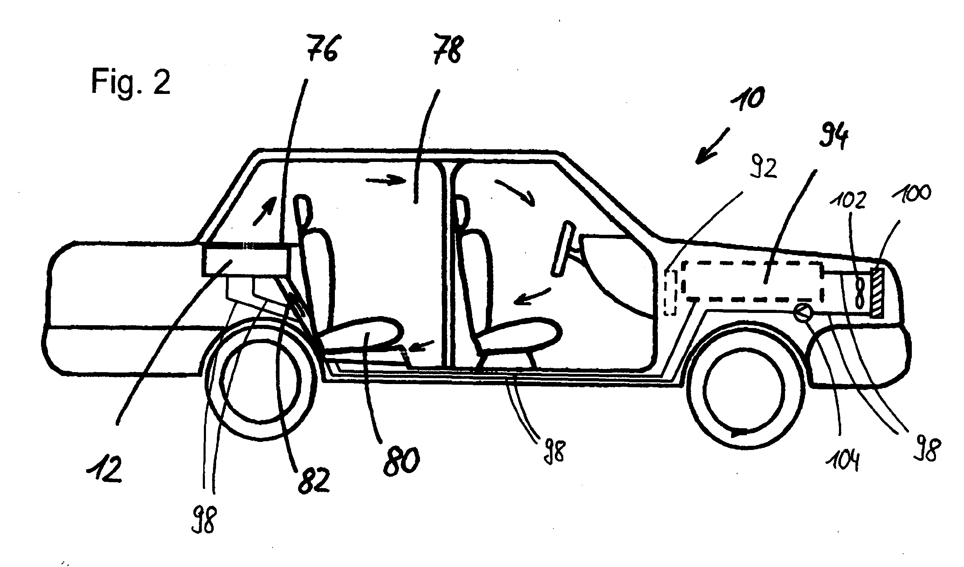

Figur 2 zeigt eine schematische Darstellung des Kraftfahrzeugs 10 mit der Klimaanlage 12. Die Klimaanlage 12 ist im Kofferraum montierbar, vorzugsweise als nachrüstbare Einheit. Zusätzlich zur beschriebenen Klimaanlage 12 hat das Kraftfahrzeug 10 eine herkömmliche Klimaanlage 92, bei der ein Kompressor eines herkömmlichen Kältekreises mechanisch von einem Antriebsaggregat 94, vorzugsweise einem Verbrennungsmotor, antreibbar ist. Während der Fahrt des Kraftfahrzeugs 10 und dem damit verbundenen Betrieb des Antriebsaggregats 94 kann der Innenraum 78 über die herkömmliche, fahrzeugeigene Klimaanlage 92 in allgemein bekannter Weise gekühlt bzw. mittels Abwärme des Antriebsaggregats 94 erwärmt werden. Bei Stillstand des Antriebsaggregats 94 kann der Innenraum 78 über die Klimaanlage 12 klimatisiert werden. Das Antriebsaggregat 94 wird in allgemein bekannter Weise über einen Kühlkreislauf 98 gekühlt, in dem Kühlflüssigkeit zirkuliert wird. In den Kühlkreislauf 98 ist darüber hinaus ein Wärmetauscher 100 eingebunden, der in der Kfz-Fachsprache als Kühler bezeichnet wird und der im Bereich der Fahrzeugfront zum Abgeben der vom Antriebsaggregat 94 in den Kühlkreislauf 98 eingespeisten Abwärme vorgesehen ist. Dem Wärmetauscher 100 ist ein Gebläse 102 zugeordnet, mit dem die Abgabe von thermischer Energie vom Wärmetauscher 100 an die Umgebungsluft unterstützt werden kann. Außerdem ist im Kühlkreislauf eine Pumpe 104 angeordnet, welche die Kühlflüssigkeit im Kühlkreislauf 98 zirkuliert. Erfindungsgemäß ist zusätzlich auch die Klimaanlage 12 in den Kühlkreislauf 98 eingebunden, wobei die bereits erläuterten Wärmetauscher 96 und 106 Abwärme heißer Teile des Brennstoffzellensystems 14 und des Kältekreises 16 in den Kühlkreislauf 98 einbringen. Die Pumpe 104 zirkuliert die Kühlflüssigkeit vorzugsweise derart, dass das Antriebsaggregat 94 im Kühlkreislauf 98 stromabwärts der Klimaanlage 12 angeordnet ist. Dies hat den Vorteil, dass bei Standklimatisierung und dem damit verbundenen Abtransport von Abwärme von der Klimaanlage 12 zur Vorwärmung des stillstehenden Antriebsaggregats 94 führt, wodurch das Kaltstartverhalten des Antriebsaggregats 94 verbessert werden kann.

Nachfolgend werden verschiedene Betriebszustände aufgezeigt, die mittels der vorstehend beschriebenen Klimaanlage 12 realisierbar sind:

Kühlbetrieb mit Umluftzirkulation: In diesem Betriebszustand ist die Stelleinrichtung 68 so geschaltet, dass Luft aus dem Innenraum 78 über die Luftführung 82 zu dem Gebläse 64 geführt wird. Dieser Luftstrom 70 wird gekühlt und über die Stelleinrichtung 72 und die Luftführung 74 in den Innenraum 78 geführt, wodurch dieser gekühlt wird. Um im Kühlbetrieb ein Aufheizen des Kofferraums, in dem die Klimaanlage 12 angeordnet ist, zu vermeiden, wird die Abwärme der heißen Teile der Klimaanlage 12, insbesondere des Reformers 18, des Brennstoffzellenstapels 26, des Nachbrenners 42 und des Kondensators 58, über die Wärmetauscher 96, 106 in den Kühlkreislauf 98 eingespeist, mittels der Pumpe 104 zum Wärmetauscher 100 weitergefördert und dort mit Unterstützung des Gebläses 102 nach Außen an die Umgebungsluft abgeführt.

Kühlbetrieb mit Außenluftzuführung: In diesem Betriebszustand ist die Stelleinrichtung 68 so geschaltet, dass Au-ßenluft über die Außenluftleitung 66 zu dem Gebläse 64 geführt wird. Der Luftstrom 70 wird gekühlt und über die Stelleinrichtung 72 und die Luftführung 74 in den Innenraum 78 geführt. Der über die Luftführung 82 aus dem Innenraum 78 führende Luftstrom wird von der Stelleinrichtung 68 nach Außen abgegeben. Hinsichtlich des Abführens der Abwärme des Brennstoffzellensystems 14 und des Kondensators 58 werden die im Rahmen des vorstehend beschriebenen Kühlbetriebs erläuterten Maßnahmen ergriffen.

Heizbetrieb mit Umluftzirkulation: In diesem Betriebszustand wird über die Luftführung 82, die Stelleinrichtung 68 und die Luftführung 84 ein Luftstrom 88 aus dem Innenraum 78 zum Gebläse 86 geführt. Der Kältekreis 16 ist nicht in Betrieb, d.h. der Elektromotor 32 wird nicht betrieben. Das Gebläse 86 führt den Luftstrom 88 an den heißen Teilen des Brennstoffzellensystems 14 vorüber. Die auf diese Weise vorgewärmte Luft wird mittels der Luftführung 90 zu der elektrischen Heizeinrichtung 36 und weiter zur Stelleinrichtung 72 geführt. Die elektrische Heizeinrichtung 36 wird zur Erwärmung der Luft in der Luftführung 90 mit elektrischem Strom betrieben. Anschließend strömt die erwärmte Luft über die Stelleinrichtung 72 und die Luftführung 74 in den Innenraum 78. Alternativ oder zusätzlich kann die Abwärme der heißen Teile des Brennstoffzellensystems 14 über den Wärmetauscher 96 in den Kühlkreislauf 98 eingespeist werden. Zur Nutzung dieser in den Kühlkreislauf 98 eingespeisten Abwärme für Heizzwecke wird das fahrzeugeigene Lüftungssystem angesteuert und das entsprechende Gebläse aktiviert, so dass die über den Kühlkreislauf 98 abtransportierte Abwärme über die fahrzeugeigene Heizung in den Fahrzeuginnenraum 78 gelangt. Für diese Zwecke ist häufig ein weiterer Wärmetauscher in den Kühlkreislauf 98 integriert, der die in den Fahrzeuginnenraum 78 zu blasende Luft erwärmt.

Heizbetrieb mit Außenluftzuführung: In diesem Betriebszustand wird Außenluft über die Außenluftleitung 66 von der Stelleinrichtung 68 der Luftführung 84 zugeführt. Die durch den Betrieb des Brennstoffzellensystem 14 entstehende Abwärme erwärmt den Luftstrom 88. Dieser erwärmte Luftstrom wird, wie im vorstehend beschriebenen Betriebszustand, über die Luftführung 90, die elektrische Heizeinrichtung 36, die Stelleinrichtung 72 und die Luftführung 74 in den Innenraum 78 geleitet. Anschließend wird dieser Luftstrom über die Luftführung 82 zur Stelleinrichtung 68 geführt, wo er nach Außen abgegeben wird. Alternativ oder zusätzlich kann auch in diesem Betriebszustand die Abwärme der heißen Teile des Brennstoffzellensystems 14 über den Wärmetauscher 96 in den Kühlkreislauf 98 eingespeist werden und dazu genutzt werden, den Fahrzeuginnenraum 78 zu zusätzlich zu erwärmen.

Diese unterschiedlichen Betriebszustände werden über eine elektronische Steuereinheit angesteuert, die je nach Temperatur im Innenraum 78, Außentemperatur, eingestellten Solltemperaturen und gewünschtem Klimatisierungsbetrieb den geeigneten Betriebszustand auswählt. Diese elektronische Steuereinheit ist aus Gründen der Übersichtlichkeit in den Figuren nicht dargestellt, jedoch ist dem Fachmann sofort ersichtlich, dass diese zumindest mit den entsprechenden Fördereinrichtungen in den Strängen 20, 22, 24, 44 und 46 der Energieverteilung in der elektrischen Leitung 30, den Gebläsen 64 und 86, der elektrischen Heizeinrichtung, dem Elektromotor 32, den Stelleinrichtungen 68 und 72, dem Gebläse 102, der Pumpe 104 sowie den entsprechenden Temperatursensoren verbunden ist.

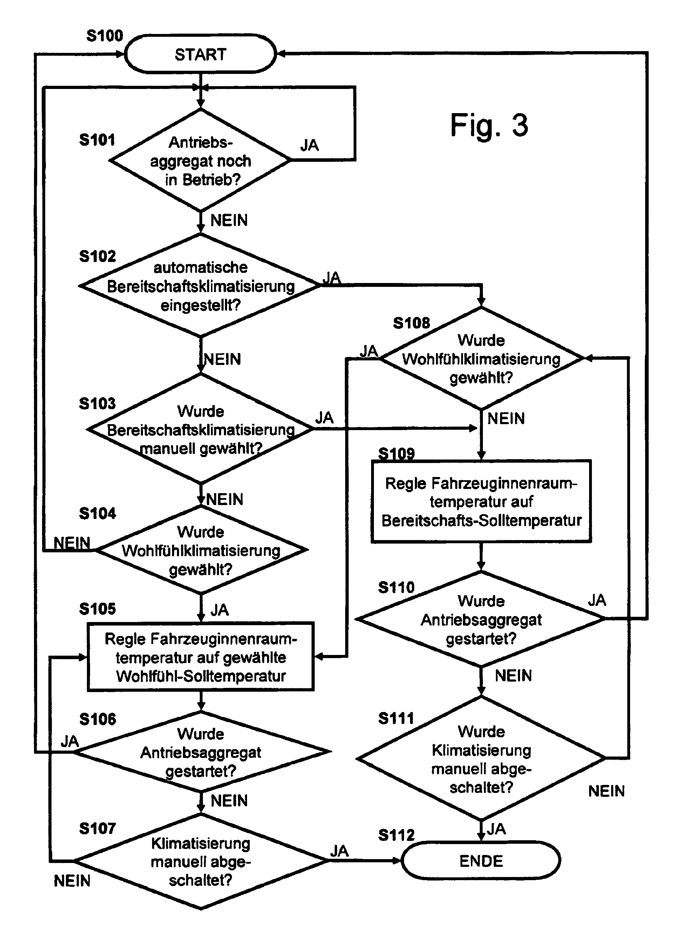

Figur 3 zeigt ein Flussdiagramm des Klimatisierungsbetriebs der erfindungsgemäßen Klimaanlage 12. Die Routine aus Figur 3, welche von der elektronischen Steuereinheit ausgeführt wird, startet bei Schritt S100, wenn die Klimaanlage 12 manuell eingeschaltet wird. Bei Schritt S101 wird bestimmt, ob das Antriebsaggregat 94 immer noch in Betrieb ist. Der Prozess fährt erst dann zu Schritt S102 fort, wenn die Abfrage in Schritt S101 negativ ist. In Schritt S102 wird bestimmt, ob der Benutzter über einen Auswahlschalter oder eine entsprechende Programmierung der Klimaanlage 12 einen automatischen Bereitschaftsbetrieb ausgewählt hat. Falls dies nicht der Fall ist, fährt der Prozess zu Schritt S103 fort, wo bestimmt wird, ob der Benutzer manuell eine Bereitschaftsklimatisierung ausgewählt hat. Ist dies nicht der Fall, dann fährt der Prozess zu Schritt S104 fort, wo bestimmt wird, ob der Benutzer manuell eine Wohlfühlklimatisierung ausgewählt hat. Falls dies mit "JA" zu beantworten ist, fährt der Prozess zu Schritt S105 fort, bei dem eine Wohlfühlklimatisierung durchgeführt wird. Bei dieser Wohlfühlklimatisierung wird der Innenraum 78 des Kraftfahrzeugs 10 auf eine Wohlfühltemperatur (z.B. 18°C) klimatisiert, indem eine Auswahl aus den verschiedenen Heiz- und Kühlmodi von der elektronischen Steuereinheit getroffen wird. Mit dem nachfolgenden Schritt S106 wird festgelegt, dass diese Wohlfühlklimatisierung automatisch gestoppt wird, wenn das Antriebsaggregat 94 gestartet wird. Wenn in Schritt S106 demnach bestimmt wird, dass das Antriebsaggregat 94 noch nicht läuft, wird in S107 bestimmt, ob die Klimaanlage 12 manuell abgestellt wurde. Bei einer manuellen Abschaltung endet der Prozess bei Schritt S112, ansonsten kehrt der Prozess zurück zu Schritt S105. Falls der Benutzer in Schritt S104 keine Wohlfühlklimatisierung gewählt hat, kehrt der Prozess zu Schritt S101 zurück. Falls in Schritt S102 bestimmt wurde, dass eine automatische Bereitschaftsklimatisierung gewählt wurde, dann fährt der Prozess von dort zu Schritt S108 fort, wo bestimmt wird, ob von dem Benutzer manuell eine Wohlfühlklimatisierung gewählt wurde. Ist dies der Fall, dann fährt der Prozess zu Schritt S105 fort, wo die bereits beschriebene Wohlfühlklimatisierung durchgeführt wird. Falls in Schritt S108 bestimmt wird, dass der Benutzer keine Wohlfühlklimatisierung ausgewählt hat, dann fährt der Prozess zu Schritt S109 fort, wo eine Bereitschaftsklimatisierung durchgeführt wird. Bei dieser Bereitschaftsklimatisierung wird die Temperatur im Innenraum 78 auf eine Bereitschafts-Solltemperatur (z.B. 25°C) geregelt, die sich von der Wohlfühltemperatur unterscheidet. Dies wird realisiert, indem die elektronische Steuereinheit in geeigneter Weise aus den beschriebenen Heiz- und Kühlbetriebsarten auswählt. Ist die Außentemperatur hoch, dann ist die Bereitschafts-Solltemperatur größer als die Wohlfühltemperatur. Ist hingegen die Außentemperatur niedrig, dann ist die Bereitschafts-Solltemperatur geringer als die Wohlfühltemperatur. Somit wird beispielsweise bei hoher Außentemperatur ein Aufheizen des Innenraumes 78 verhindert und im Bedarfsfall ein sehr schnelles Erreichen der Wohlfühltemperatur gewährleistet, weil der Innenraum 78 bereits "vorgekühlt" ist. Nach Schritt S109 fährt der Prozess zu Schritt S110 fort, wo überprüft wird, ob das Antriebsaggregat 94 gestartet wurde. Ist dies der Fall, dann kehrt der Prozess zu Schritt S100 zurück. Ansonsten fährt der Prozess zu Schritt S111 fort, wo bestimmt wird, ob der Benutzer die Klimatisierung manuell abgestellt hat - wenn "JA", dann endet der Prozess bei Schritt S112 und wenn "NEIN", dann kehrt der Prozess zu Schritt S108 zurück.

Der bevorzugte Betrieb der Klimaanlage 12 sieht in der Praxis so aus, dass eine automatische Bereitschaftsklimatisierung gewählt ist. Wird das Antriebsaggregat 94 betrieben, dann kann der Innenraum 78 über die auf das Fahrzeug optimierte, sehr effektive und speziell ausgelegte Klimaanlage 92 klimatisiert werden. Sobald das Antriebsaggregat 94 abgestellt wird (und die Insassen das Kraftfahrzeug 10 eventuell verlassen), startet die Klimaanlage 12 die Bereitschaftsklimatisierung, die den Innenraum bei hoher Außentemperatur auf beispielsweise 25°C kühlt. Dieser Bereitschaftsklimatisierungsbetrieb kann mit 60 Litern Brennstoff problemlos 12 Tage im Dauerbetrieb erfolgen. Der Bereitschaftsklimatisierungsbetrieb wird solange durchgeführt, bis der Benutzer kurz vor Fahrtantritt eine Wohlfühlklimatisierung wählt, die dann den Innenraum 78 auf beispielsweise 18°C kühlt. Die Wohlfühlklimatisierung wird dann solange durchgeführt bis das Antriebsaggregat 94 wieder gestartet wird.

Obwohl im vorstehen erläuterten Ausführungsbeispiel nur der Kondensator 58 als heißes Teil des Kältekreises 16 genannt wurde, ist es auch möglich die Abwärme weiterer Komponenten des Kältekreises, wie beispielsweise des Kompressors 56 oder des Elektromotors 32 über entsprechende Wärmetauscher in den Kühlkreislauf 98 einzuspeisen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Kraftfahrzeug
- 12: Klimaanlage
- 14: Brennstoffzellensystem
- 16: Kältekreis
- 18: Reformer
- 20: Brennstoffstrang
- 22: Brennstoffstrang
- 24: Oxidationsmittelstrang
- 26: Brennstoffzellenstapel
- 28: Kathodenzuluftstrang
- 30: Elektrische Leitung
- 32: Elektromotor
- 34: Batterie
- 36: Elektrische Heizeinrichtung
- 38: Anodenabgasstrang
- 40: Mischeinheit
- 42: Nachbrenner
- 44: Brennstoffstrang
- 46: Oxidationsmittelstrang
- 48: Mischeinheit
- 50: Kathodenabluftstrang
- 52: Wärmetauscher
- 54: Abgasauslass
- 56: Kompressor
- 58: Kondensator
- 60: Expansionsorgan
- 62: Verdampfer
- 64: Gebläse
- 66: Außenluftleitung
- 68: Stelleinrichtung
- 70: Luftstrom
- 72: Stelleinrichtung
- 74: Luftführung
- 76: Hutablage
- 78: Fahrzeuginnenraum
- 80: Sitzbank
- 82: Luftführung
- 84: Luftführung
- 86: Gebläse
- 88: Luftstrom
- 90: Luftführung
- 92: Herkömmliche Klimaanlage
- 94: Antriebsaggregat
- 96: Wärmetauscher
- 98: Kühlkreislauf
- 100: Wärmetauscher
- 102: Gebläse
- 104: Pumpe
- 106: Wärmetauscher

## Patentansprüche

1. Kraftfahrzeug (10) mit:
- einem Antriebsaggregat (94) zum Antrieb des Kraftfahrzeugs (10);
- einem Kühlkreislauf (98), in dem Flüssigkeit zur Kühlung des Antriebsaggregats (94) zirkuliert werden kann;
- einer Klimaanlage (12) zur Standklimatisierung des Kraftfahrzeugs (10), welche ein Brennstoffzellensystem (14) zum Betreiben eines Kältekreises (16) aufweist,
**dadurch gekennzeichnet, dass** die Abwärme zumindest einer Komponente (18, 26, 42, 58) der Klimaanlage (12) in den Kühlkreislauf (98) einspeisbar ist, um die Abwärme über den Kühlkreislauf (98) abzutransportieren.

2. Kraftfahrzeug (10) gemäß Anspruch 1, **dadurch gekennzeichnet, dass** die Abwärme über den Kühlkreislauf (98) abtransportierbar ist und an anderer Stelle einem Fahrzeuginnenraum (78) für Heizzwecke zuführbar ist.

3. Kraftfahrzeug (10) gemäß einem der vorhergehenden Ansprüche, **dadurch gekennzeichnet, dass** in den Kühlkreislauf (98) ein Wärmetauscher (100) eingebunden ist, wobei die Abwärme über den Kühlkreislauf (98) abtransportierbar ist und über den Wärmetauscher (100) an die Umgebungsluft abgegeben werden kann.

4. Kraftfahrzeug (10) gemäß Anspruch 3, **dadurch gekennzeichnet, dass** des Weiteren in den Kühlkreislauf (98) eine Pumpe (104) eingebunden ist, deren Betrieb abhängig vom Betrieb der Klimaanlage (12) steuerbar ist.

5. Kraftfahrzeug (10) gemäß Anspruch 3 oder 4, **dadurch gekennzeichnet, dass** dem Wärmetauscher (100) des Weiteren ein Gebläse (102) zugeordnet ist, dessen Betrieb abhängig vom Betrieb der Klimaanlage (12) steuerbar ist.

6. Klimaanlage (12) für ein Kraftfahrzeug (10), mit einem Brennstoffzellensystem (14) zum Betreiben eines Kältekreises (16), **dadurch gekennzeichnet, dass** die Klimaanlage (12) dazu angepasst ist, die Abwärme zumindest einer ihrer Komponenten (18, 26, 42, 58) in einen Kühlkreislauf (98) für ein Antriebsaggregat (94) des Kraftfahrzeugs (10) einzuspeisen, um die Abwärme über den Kühlkreislauf (98) abzutransportieren.

7. Verfahren zum Steuern einer Klimaanlage (12) zur Standklimatisierung eines Kraftfahrzeugs (10), welche ein Brennstoffzellensystem (14) zum Betreiben eines Kältekreises (16) aufweist, **dadurch gekennzeichnet, dass** die Abwärme zumindest einer Komponente (18, 26, 42, 58) der Klimaanlage (12) in einen Kühlkreislauf (98) für ein Antriebsaggregat (94) des Kraftfahrzeugs (10) eingespeist wird, um die Abwärme über den Kühlkreislauf abzutransportieren.

8. Verfahren gemäß Anspruch 7, **dadurch gekennzeichnet, dass** die Abwärme über den Kühlkreislauf (98) abtransportiert wird und an anderer Stelle einem Fahrzeuginnenraum (78) für Heizzwecke zugeführt wird.

9. Verfahren gemäß Anspruch 7 oder 8, **dadurch gekennzeichnet, dass** die Abwärme über den Kühlkreislauf (98) abtransportiert wird und über einen in den Kühlkreislauf (98) eingebundenen Wärmetauscher (100) an die Umgebungsluft abgegeben wird.

10. Verfahren gemäß Anspruch 9, **dadurch gekennzeichnet, dass** der Betrieb einer in den Kühlkreislauf (98) eingebundenen Pumpe (104) abhängig vom Betrieb der Klimaanlage (12) gesteuert wird.

11. Verfahren gemäß Anspruch 9 oder 10, **dadurch gekennzeichnet, dass** der Betrieb eines dem Wärmetauscher (100) zugeordneten Gebläses (102) abhängig vom Betrieb des Brennstoffzellensystems (14) gesteuert wird.
